(19) **Europäisches Patentamt**
**European Patent Office**
**Office européen des brevets**

(11) **EP 4 621 023 A1**

(12) **EUROPEAN PATENT APPLICATION**

(43) Date of publication:
24.09.2025 Bulletin 2025/39

(21) Application number: 25156850.7

(22) Date of filing: 10.02.2025

(51) International Patent Classification (IPC):
*C09J 123/14* (2006.01)  *C08L 23/14* (2006.01)

(52) Cooperative Patent Classification (CPC):
(C-Sets available)
**C09J 123/14; C08L 2314/06**  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.02.2024 PT 2024119285

(71) Applicant: **Colquimica-Indústria Nacional de
Colas, S.A.**
**4440-578 Valongo (PT)**

(72) Inventors:
• **Fernandes Frutuoso, Cristina Isabel**
**4450-150 Matosinhos (PT)**
• **Reis Pereira, Jéssica Alexandra**
**4400-112 Vila Nova de Gaia (PT)**

(74) Representative: **Moniz Pereira, Manuel
Gastão da Cunha Ferreira, Lda.
Rua dos Bacalhoeiros 4
1100-070 Lisboa (PT)**

(54) **HOT MELT ADHESIVE FOR APPLICATION IN THE MANUFACTURING OF MATTRESS AND ITS OBTAINING PROCESS**

(57)    The present invention refers to a hot melt adhesive for use in industrial furniture manufacturing processes, more specifically for use in bonding foam layers in mattress construction. The hot melt adhesive comprises metallocene-catalyzed propyleneethylene copolymers, which will make it possible to eliminate the shortcomings of hot-melt adhesives whose formulation comprises amorphous alpha polyolefin polymers (APAO) and/or styrene block copolymers (SBC). Thus, the formulation of the hot melt adhesive of the present invention stands out for its excellent thermal stability, good processability to allow easy application and reduce downtime for maintenance of industrial lines, reduced tackiness and open time and setting time suitable for the mattress assembly process.

EP 4 621 023 A1

(52) Cooperative Patent Classification (CPC): (Cont.)

C-Sets
**C09J 123/14, C08L 23/14**

**Description**

**Field of Invention**

The present invention refers to a hot melt adhesive composition, more particularly, to a hot melt adhesive for application in industrial furniture manufacturing processes, more specifically for application in bonding foam to foam in the construction of mattresses. The object of the present invention is a hot melt adhesive that comprises in its composition metallocene-catalyzed propylene-ethylene copolymers, and that has rheological behavior and technical properties such as open time and setting time adjusted to the production process used in the mattress manufacturing industry.

**Background of Invention**

The present invention generally falls within the hot melt adhesive industry. Hot melt adhesives are products that are applied on the surface of a material at high temperatures and in a molten state, which harden when cooled and return to a solid state, forming a bond between at least two materials. The application temperature for this type of product varies between 120 and 200 °C. Hot melt adhesives are used in a wide variety of industrial applications worldwide and can meet a wide range of complex requirements in the adhesive industry. The hot melt adhesive market has seen exponential growth in recent decades due to the large-scale production of synthetic polymers. Furthermore, compared to other adhesive technologies, hot-melt adhesives have economic and environmental advantages.

Sustainability is currently one of the main focuses of the hot melt adhesive industry, due to growing concerns about the environmental degradation of our planet and its resources. This type of adhesive does not contain organic solvents in its composition, which makes it a preferred option when it comes to environmental preservation.

Typically, a hot melt formulation comprises a polymeric component, a resin component, a wax component and an antioxidant component. The properties of hot melt adhesives vary according to their composition and are adjusted according to their purpose. These adhesives may contain different chemical bases in their formulation, this being the polymeric component present in the greatest quantity in their formulation. The polymers most used in the formulation of hot melt adhesives are styrene block copolymers (SBC), polyolefins (PO), ethylene vinyl acetate (EVA) and ethylene butyl acrylate (EBA), polyamides (PA), polyesters (PET) and polyurethanes (PU), among others.

Different industries and therefore different applications require different performances from hot melt adhesives. In largely automated industries with fast processes, such as the packaging industry, it is essential to use adhesives with short open times and setting times. On the other hand, industries that rely heavily on manual labor, such as the mattress industry, require longer working times and, therefore, it is essential that the hot melt adhesive used has a longer open time. The mattress production process is characterized by a combination of automatic and manual processes, which requires adaptability on the part of the adhesive used. It must be able to adapt to variable production times, an inevitable consequence associated with the manual process.

A consequence associated with the manual process is the inefficient bond of foam parts. If the foams are not well bonded, "air pockets" are created where the adhesive is applied and does not fulfill its function of joining the two substrates. In these areas, the adhesive remains on the surface of the foam and is in contact with air. During use of the mattress by the end customer, pressure is applied to these areas, and the foam comes into contact with the adhesive surface, which is traditionally sticky. This movement creates noise, which in turn is one of the main sources of complaints in the mattress industry. For this reason, it is preferable to choose a hot-melt adhesive formulation that has reduced residual tackiness in order to prevent this type of complaint.

Another property considered relevant for hot-melt adhesives used in mattress manufacturing will be strong adhesion to different types of foams and textile materials that are used as raw materials in this industry. Furthermore, the adhesives used must guarantee flexibility appropriate to the characteristic mobility of the materials that make up the final product.

Finally, hot-melt adhesives intended for this industry should preferably have a rheology that allows their efficient use at a temperature between 140 and 170 °C. When looking for efficient use, the good thermal stability of the adhesive, when exposed to the mentioned temperature range, should not be discounted. A hot melt adhesive with poor thermal stability will cause maintenance problems in the production line, as the nozzles become clogged due to gel formation and even charring.

<u>Identifying and solution for the technical problem</u>

Typically, hot melt adhesives used in mattress manufacturing comprise a polymeric base consisting of amorphous alpha polyolefin polymers (APAO) or styrene block copolymers (SBC). Amorphous alpha polyolefin polymers (APAO) and styrene block copolymers (SBC) are chosen due to their rheology, as they allow the adhesive to have an open time and setting time suitable for the production process. Mattress construction is a process strongly dependent on the manual work of production line operators and for this reason, open time and setting time are extremely important properties when choosing the hot melt adhesive to be used. An open time considered suitable for this type of process must be between 60 and 300 seconds.

Despite being common, hot melt adhesives formulated based on APAO and/or SBC polymers have deficiencies, namely poor thermal stability and propensity to carbonization, and very high residual tack, which is associated with noise complaints.

For this reason, the present invention has as its object a hot melt adhesive formulation whose polymeric base comprises a mixture of metallocene-catalyzed propylene-ethylene copolymers, which will eliminate the gaps in hot-melt adhesives whose formulation comprises APAO and/or SBC polymers. Thus, the hot-melt adhesive formulation of the present invention stands out for its excellent thermal stability, good processability so that it allows easy application and reduces stops for maintenance of industrial lines, reduced residual tack and open time and setting time suitable for the production process of mattresses.

Additionally, due to the chemical base that comprises the hot melt adhesive formulation of the present invention, the formulation also has a low density compared to alternative hot melt adhesives, which allows a reduction in consumption without compromising the adhesion between the materials, a very appealing feature for the mattress producer.

The hot-melt adhesive formulation of the present invention comprises an alternative polymeric base, typically used to formulate hot melts adhesives for other markets, such as food packaging, since its technical properties are considered more suitable for industrial lines used in these industries. More specifically, the type of polymers that comprise the formulation of the present invention are characterized by having a short open time, that is, less than 45 seconds. However, it was unexpectedly possible to obtain a long open time, that is, greater than 120 seconds, through its combination with the remaining components that comprise the formulation.

### Background of Invention

Examples of traditional hot melt adhesive formulations applied in the manufacture of mattresses whose polymeric base comprises amorphous alpha-polyolefin polymers or styrene copolymers, are described in several patent documents, such as CN104449465A and CN103805112A, respectively. Polymeric bases comprising amorphous alpha-polyolefins or styrene copolymers are not suitable for solving the technical problem of the present invention.

On the other hand, documents such as US11572494B2, US2020277419A1 and WO2015135113A1 describe hot melt adhesives formulations comprising polyolefin copolymers that have opening times and setting times that are within the range considered suitable for the construction of mattresses, despite the adhesive formulations mentioned in documents are not intended to be formulated for application in the manufacture of mattresses. However, the polymeric bases mentioned are comprised of amorphous polyolefins or mixtures with amorphous polyolefins. These polymers present very different rheological behavior when compared to metallocene-catalyzed propylene-ethylene copolymer, and do not present the same advantages for the production process. More specifically, metallocene-catalyzed copolymers are the only ones that present excellent thermal stability, very low density and easier processability. For this reason, the hot melt adhesives formulations described in the mentioned patent documents are also not suitable for solving the technical problem of the present invention.

### Advantages of the invention

The object of the present invention is a hot melt adhesive composition for application, particularly, but not exclusively, in the manufacture of mattresses, which comprises in its formulation a mixture of propylene-ethylene copolymers. For this reason, it presents superior performance compared to hot melt adhesive formulations typically used in mattress construction. More specifically, it has lower density which allows for reduced consumption in industrial lines; superior thermal stability in order to prevent the occurrence of carbonization of the composition upon exposure to high temperatures, that is, at temperatures equal to or greater than 160 °C; good processability to allow easy application and reduce downtime for maintenance of industrial lines; good flexibility to allow the foam to which it is applied to remain malleable; reduced stickiness to prevent noise from occurring; and open time and setting time appropriate to the production process of industrial mattress manufacturing lines.

### Brief Figure Description

These and other characteristics can be easily understood through the attached drawings, which should be considered as mere examples and in no way restrictive of the scope of the invention.

In a preferred embodiment:

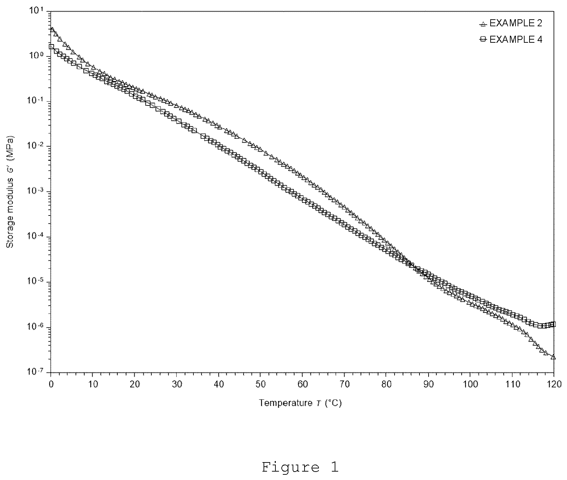

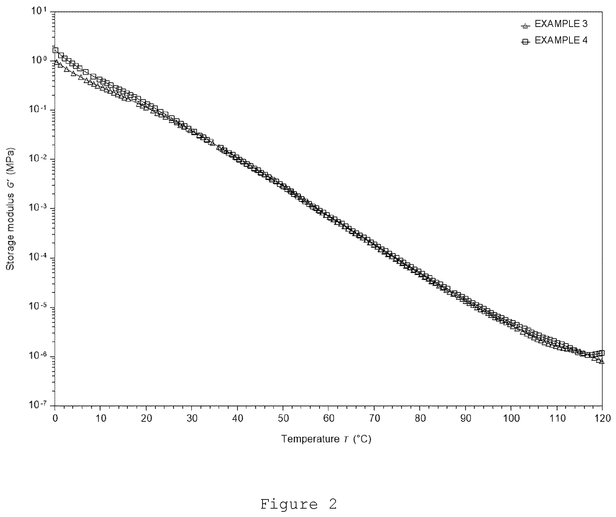

Figure 1 and Figure 2 present the results of the rheological analysis and solidification temperature for Examples 2 and 4 and for Examples 3 and 4, respectively, through the solidification temperature analysis, ARES-G2 Rheometer, 40 mm, 0,85 g, 6 °C/min, (100-1)%, 1 Hz.

**Detailed Description of the Invention**

The object of the present invention is a hot-melt adhesive composition for application in the manufacture of furniture, particularly, but not exclusively, in the manufacture of mattresses and allows replacing the technology that is currently being used, that is, hot melt adhesives whose polymeric base comprises mainly amorphous alpha-polyolefin polymers or styrene copolymers.

Additionally, the hot melt adhesive composition of the present invention has a viscosity at 160 °C comprised between 1.650 and 8.420 mPa·s measured in accordance with ASTM D3236, a softening point comprised between 80 and 120 °C, preferably between 80 and 105 °C measured in accordance with ASTM E28, and an open time of at least 120 s, preferably between 120 s and 300 s, and a setting time between 0,5 s and 5 s measured according to the Colquimica method n° 129 (MC 129) at 160 °C.

According to the present invention, the hot melt adhesive composition for application in the manufacture of mattresses comprises in its formulation:

- a polymeric component comprising at least one metallocene-catalyzed propylene-ethylene copolymer;
- a resin component;
- a plasticizing component comprising at least one plasticizer capable of controlling rheological properties such as viscosity;
- an antioxidant component comprising at least one phenolic antioxidant capable of preventing adhesive degradation;
- a sliding additive component comprising at least one sliding agent capable of reducing the coefficient of friction between surfaces and preventing unwanted adhesion.

Since the object of the invention is a hot melt adhesive composition, properties such as adhesion and cohesion cannot be neglected.

By "open time" is meant the maximum time interval after the hot melt adhesive has been applied to the first substrate, in which it is possible to effectively adhesive a second substrate.

By "long open time" is meant an open time greater than 120 seconds measured according to Colquimica method n° 129 (MC 129) at 160 °C.

By "adequate open time" is meant an open time between 120 and 300 seconds measured according to Colquimica method n° 129 (MC 129) at 160 °C.

By "setting time" is meant the minimum time interval in which it is necessary to apply pressure for two substrates to bond effectively. Thus, setting time is associated with the speed at which the adhesive recovers its cohesive forces during cooling.

"Adequate setting time" means a setting time between 0,5 and 5 seconds measured according to Colquimica method n° 129 (MC 129) at 160 °C.

By "rheological behavior" is meant the analysis of the viscoelastic nature of the adhesive and its dependence on temperature variations.

By "suitable rheological behavior" is meant the change in material properties with temperature, which results in suitable technical properties such as open time and setting time.

By "lower density/low density" is meant a density equal to or less than 0,95 measured according to the Colquimica n° 206 method: Density is the ratio between the mass of a portion of glue and the mass of an equal volume of distilled water at 4 °C. To determine the density of hot melt adhesives, start by weighing a pycnometer filled with distilled water (m0), followed by the pycnometer with water and approximately 1 g of hot melt adhesive next to it (m1) and finally the pycnometer with water and the hot-melt adhesive inside (m2). Finally, the density of the hot-melt adhesive is calculated by following formula:

$$\rho = \frac{m1 - m0}{m1 - m2}$$

"Suitable softening point" means a softening point between 80°C and 120°C measured in accordance with ASTM E28.

By "tack" is meant the force exerted by the adhesive after pressure is applied on its surface.

By "reduced tack" is meant a tack value of less than 5 N measured in accordance with ASTM D2979.

By "adequate tackiness" is meant a tackiness value comprised between 0 and 5 N measured in accordance with ASTM D2979.

By "good processability/better processability" it is meant the easy use and application of hot melt adhesives in industrial lines, that is, they do not accumulate dirt and result in downtime for cleaning and maintenance.

By "thermal stability" is meant the evolution of the hot melt properties during prolonged exposure to heat and its consequent degradation, namely yellowing, carbonization, gel and skin formation on the surface.

"Superior thermal stability/excellent thermal stability" means the absence or negligible presence of the undesirable effects, namely carbonization, gel formation and skin formation on the surface, during a period of 24 hours at 160 ° C.

By "flexibility" is meant the ability of hot melt to be subjected to repeated bending without cracking, splitting or fracturing.

By "good flexibility" is meant the ability of the hot melt adhesive to deform elastically, that is, all deformation suffered is fully recoverable and does not present fissures, cracks or fractures.

By "polymeric base" is meant the polymeric materials that contribute to the fundamental characteristics of the hot melt adhesive composition and constitute the foundation of the hot melt adhesive composition.

By "strong hot adhesion" it is meant the ability of the hot melt adhesive to establish a bond with the substrates immediately after being applied, with this bond being reinforced during cooling.

By "Suitable viscosity" is meant the viscosity value between 2 000 and 4 000 mPa·s at 160 °C measured in accordance with ASTM D3236.

"ASTM" it is meant tests performed in accordance with the standards of the American Society for Testing and Materials (ASTM) .

By "ISO" is meant tests carried out in accordance with the standards of the International Organization for Standardization (ISO).

By "DIN EN ISO" is meant the test carried out in accordance with national (DIN), European (EN) and international (ISO) standards relating to hot melt adhesives.

Polymeric component

The object of the present invention is a hot-melt adhesive composition intended for application in the furniture industry, namely, but not exclusively, in the manufacture of mattresses, which comprises in its formulation a polymeric component comprising at least one thermoplastic polymer capable of guaranteeing properties, such as open time and setting time suitable for its application in the manufacture of mattresses. Furthermore, the polymeric component makes it possible to obtain a hot melt adhesive with reduced residual tack after solidification.

The polymeric component suitable for the hot-melt adhesive composition of the present invention comprises thermoplastic polyolefin polymers, preferably comprising at least one metallocene-catalyzed propylene-ethylene copolymer.

More preferably, the polymeric component comprises a mixture in which at least 60% of the total mass of the polymeric component corresponds to a metallocene-catalyzed propylene-ethylene copolymer with a percentage of ethylene between 10% and 15% measured according to ASTM D3900, preferably 12% measured according to ASTM D3900, and a viscosity at 190 °C between 7.500 and 7.600 mPa·s measured according to ASTM D1646, preferably between 7.550 and 7.590 mPa·s, more preferably 7.570 mPa·s and a crystallinity between 10 J/g and 20 J/g as measured using Differential Scanning Calorimetry (DSC) according to ASTM E 794-85, preferably 15 J/g, and up to 40% of the total mass of the polymeric component corresponds to a metallocene-catalyzed propylene-ethylene copolymer with a percentage of ethylene between 5% and 10% measured according to ASTM D3900, preferably 6%, and a viscosity at 190 °C between 1.000 mPa·s and 1.500 mPa·s measured according to ASTM D1646, preferably 1.200 mPa·s and crystallinity between 20 J/g and 50 J/g as measured using Differential Scanning Calorimetry (DSC) according to ASTM E 794-85, preferably between 30 J/g and 40 J/g, more preferably 39 J/g.

The polymeric component content should be up to 70% by weight of the hot melt adhesive, preferably between 15% and 65%, more preferably between 49% and 55%.

Resin component

The main objective of the resin component is to ensure adequate adhesion to the materials used, namely foams, fabrics and non-woven fabrics.

The resin component is selected, preferably but not exclusively, from: pure monomer resin or hydrocarbon resin. The hydrocarbon resin is selected, preferably but not exclusively, but not exclusively, from: aliphatic C5, aromatic C9, aliphatic-aromatic C5/C9 and dicyclopentadiene (DCPD) resins, preferably aromatic C9, more preferably C9 hydrogenated synthetic resin, even more preferably hydrogenated synthetic resin obtained through the polymerization of C9.

The resin component of the present invention has a melt viscosity of less than 250 mPa·s at 190 °C according to test method DIN 53019 and a softening point between 95 and 110 °C according to ISO 4625, preferably a softening point of 100 °C according to ISO 4625.

The resin component content corresponds to up to 50% by weight of the hot melt adhesive, preferably between 15% and 46%, even more preferably between 30% and 40%.

Antioxidant component

The antioxidant component in the formulation aims to delay the yellowing of the hot-melt adhesive due to exposure to heat and prevent degradation and eventual loss of properties, both during its production and during application.

The hot melt adhesive of the present invention comprises in its formulation at least one primary, secondary, multifunctional phenolic antioxidant or mixture thereof, preferably primary phenolic antioxidants.

The content of the antioxidant component suitable for the present invention corresponds to up to 10% by weight of the hot melt adhesive, preferably up to 5%, more preferably, between 0,1% and 3%.

Plasticizer Component

The plasticizer component allows the viscosity of the hot melt adhesive to be adjusted to values considered appropriate, so that it can be easily applied in industrial lines. By ensuring that the hot melt adhesive composition has the appropriate value of said property, it is also ensured that the temperature necessary for using the hot melt adhesive of the invention in industrial lines is adequate, being between 100 and 200 °C, preferably between 140 and 170 °C.

Additionally, the plasticizing component allows, through mixing with the polymeric component, the adhesive to have an open time and setting time suitable for the mattress production process. In this way, the amount of plasticizer is carefully adjusted, since a higher or lower amount is reflected in changes in the mentioned characteristics and may result in the formulation being unable to be used in industrial mattress production lines.

For this reason, preference is given to a plasticizing component comprising at least one liquid plasticizer at room temperature, selected, but not exclusively, from liquid polymers, saturated hydrocarbons, mineral oils, hydrotreated naphthenic or paraffinic oils, preferably isobutylene-butene copolymer. More preferably, polybutene with a molecular weight between 1000 and 1500 Mn determined in accordance with the ASTM D 3536, preferably 1200 Mn, and an amount of water between 65 and 75 mg/kg determined in accordance with ASTM D 6304, preferably 70 mg/kg.

The plasticizer component content should be up to 20% by weight of the hot melt adhesive, preferably between 5% and 20%, even more preferably between 12% and 17%.

Sliding additive component

The sliding additive component aims to prevent the hot-melt adhesive from agglomerating due to the pressure sustained during product storage. The sliding additive component comprises at least one sliding agent capable of reducing the coefficient of friction between surfaces and preventing unwanted adhesion.

Suitable additives for the hot melt adhesive of the present invention are selected, but not exclusively, from: ethylene bis stearamide (EBS), ethylene bisoleamide (EBO), erucamide and erucic acid.

The additive component corresponds to up to 5% by weight of the hot melt adhesive, preferably between 0,01% and 3%, even more preferably between 0,1% and 1%.

Optionally, other components may be added with the aim of changing specific properties or the performance of the hot melt adhesive used in the manufacture of mattresses.

Production method

The method for the production of hot melt of the present invention comprises the following steps:

a) Melt the resin component, the antioxidant component and the plasticizer component in a mixer at a constant temperature of 130 °C, with constant stirring, until a paste with a homogeneous appearance is formed;

b) Add the sliding additive component and mix with constant stirring, keeping the temperature constant. Keep stirring until a homogeneous paste is observed;

c) Add the polymeric component to the paste obtained in step b) and mix with constant stirring, keeping the temperature constant;

d) Maintain constant stirring and temperature until the mixture obtained in step c) presents a homogeneous and translucent appearance.

The process begins with the plasticizer component and the resin component, since they have a low viscosity and melting point, therefore, allow the rapid formation of a paste with a viscosity suitable for the addition of the polymeric component. The antioxidant component is also added at an early stage in order to prevent the degradation of the properties of the raw materials due to exposure to high temperatures.

Embodiments of the invention

To verify the results obtained with the composition/ formulation of the hot melt adhesive of the present invention, several technical tests and tests were carried out, which are presented in Table 1.

This invention is further illustrated by the following nonlimiting examples.

Example 1

In Example 1 provides information on the composition/ formulation of a hot melt adhesive with technical properties and rheological behavior considered suitable for the manufacture of mattresses, namely viscosity, open time and setting time and solidification temperature. This formulation can be considered a standard hot melt adhesive formulation for the manufacture of mattresses. In this composition, the chemical base used consists of amorphous polyolefin polymers (APO), which is why it is not suitable for the present invention. However, it will serve as a representation of the closest possible standard formulation to that of the present invention, for comparison purposes. Therefore, the composition described in Example 1 was subjected to a probe adhesion measurement test (*Probe Tack* - ASTM D2979-16), where the residual tack of the hot melt adhesive was determined. The value obtained was greater than 5 N, which is typical for hot melt adhesives whose polymeric base is comprised of APO. This value means that the hot-melt adhesive cannot be considered to have low tackiness. Therefore, it may eventually lead to complaints due to noise occurring when using the mattress.

Additionally, the thermal stability of the hot-melt adhesive formulation was analyzed. This test is carried out based on the appropriate standard for the hot melt industry, ISO 10363, and consists of analyzing the adhesive by observing its surface after melting and then at intervals of 8 hours. Evidence of abnormal degradation must be looked for, such as: formation of skins on the surface of the hot melt adhesive, existence of steam escaping from the hot melt adhesive, occurrence of phase separation, occurrence of gelling and occurrence of sedimentation. Through this test, it was possible to conclude that the formulation shows signs of degradation after 48 hours, more specifically, the occurrence of gelling. For this reason, it is reinforced that the composition in Example 1 is not suitable for the present invention. These results and other technical properties of the formulation are summarized in Table 1.

Example 2

Example 2 presents a formulation of a hot melt adhesive in which the chemical base has been altered to correct the deficiencies presented in Example 1. In this case, a mixture of metallocene-catalyzed polyolefins was used. As intended, the residual tackiness of the hot melt adhesive was reduced to values below 5 N. Additionally, it was possible to complete 96 hours of exposure at 160 °C without observing signs of abnormal degradation. However, due to their rheology, metallocene (mPO) catalyzed polyolefin polymers have shorter open times when compared to APO, a consequence of their considerably higher solidification temperatures. This difference can be observed in the open time results shown in Table 1, by comparing Example 1 and Example 2. Therefore, the composition described in Example 2 is also not considered suitable for the present invention.

Example 3

In order to overcome the flaws presented in Example 2, the formulation was changed to reduce the solidification temperature and, therefore, increase the open time of the formulation. To this end, the amount of the resin component and the plasticizer component was changed. In this way, it was possible to obtain the composition described in Example 3, which has residual tack, thermal stability and adequate open time. However, changing the mass percentages of the resin component and the plasticizer component have significant consequences on the rheology of the hot melt adhesive. In particular, the changes typically made to hot melt adhesive formulations that allow it to increase its open time will, consequently, increase its setting time. As mentioned previously, it is important that the setting time of a hot melt adhesive for mattresses is reduced, so that after bonding two pieces of foam it is possible to handle them without debonding. The setting time of the composition can be determined based on a standard test for the hot melt adhesive industry, described in Method Colquimica 129. By comparison with standard formulations such as, for example, Example 1, it can be concluded that ideally the setting time value will be less than 5 seconds. Therefore, it was possible to conclude that the rheology of this hot melt adhesive is not suitable for mattress manufacturing lines, since the setting time value obtained was greater than 5 seconds, as shown in Table 1. Therefore, the formulation of Example 3 is not considered suitable for the present invention.

Example 4

Finally, the only solution found capable of solving the previously mentioned technical problem and meeting all the requirements proposed by the present invention was the composition/formulation of Example 4. Thus, Example 4 corresponds to the formulation of the hot melt adhesive of the present invention.

To obtain it, it was necessary to mix: a C9 hydrogenated synthetic resin obtained through the polymerization of C9, with a melt viscosity of less than 250 mPa·s at 190 °C according to test method DIN 53019 and a softening point of 100 °C according to ISO 4625; a phenolic antioxidant; a sliding additive component; a polymeric component comprising a mixture of a metallocene-catalyzed propylene-ethylene copolymer with an ethylene percentage of 12% measured according to ASTM D3900 and a viscosity at 190 °C of 7.570 mPa·s measured according to ASTM D1646, and a crystallinity 15 J/g measured using DSC according to ASTM E 794-85, and a metallocene-catalyzed propylene-ethylene copolymer with an ethylene percentage of 6% measured according to ASTM D3900 and a viscosity at 190 °C of 1.200 mPa·s measured according to ASTM D1646, and a crystallinity 39 J/g measured using DSC according to ASTM E 794-85; a plasticizer component comprising polybutene with a molecular weight of 1200 Mn determined in accordance with the ASTM D 3536 and an amount of water 70 mg/kg determined in accordance with the ASTM D 6304.

Contrary to what would be expected by a person skilled in the art, it was possible to adjust the setting time by making a change in the polymeric component, as opposed to the standard approach which would be to change the mass percentages of the resin and plasticizer components. More specifically, through the introduction of a polymer with a higher percentage of ethylene, it was found that the setting time of the hot melt adhesive decreases, despite the higher viscosity and lower crystallinity (viscosity at 190 °C of 7.570 mPa·s measured according to ASTM D1646, crystallinity 15 J/g measured using DSC according to ASTM E 794-85). With this mixture, properties such as viscosity, open time and setting time obtained are considered suitable for use in industrial mattress production lines, as can be seen in comparison with Example 1 and Example 3 of Table 1. Additionally, the formulation corresponding to Example 4 presents reduced tack and good thermal stability, as can be seen by comparing the results obtained and represented in Table 1.

Furthermore, by observing the graphs obtained in the rheology test, which are shown in Figure 1, it is also possible to observe that during cooling, Example 3 presents lower Storage Modulus values than Example 4. This reflects that the formulation of Example 4 can recover its cohesion more quickly. Similarly, it can be seen from Figure 2 that Example 4 recovers its cohesion slower than Example 2 and will therefore have a longer setting time - which, again, is also confirmed by the result of the test carried out to measure the setting time.

Finally, the difference between the open time of the hot melt adhesive compositions described in Example 2 and Example 4 can also be confirmed by rheological analysis, Figure 2. Unexpectedly, the higher the solidification temperature (Ts), the shorter the open time. In this way, it was possible to determine that the Ts of the formulation corresponding to Example 2 is considerably higher than that obtained for Example 4.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

Table 1

| | Example 1 | Example 2 | Example 3 | Example 4 |
|---|---|---|---|---|
| Sliding additive Component[A] | - | 0,5% | 0,5% | 0,5% |
| Resin Component[B] | 44,5% | 44,0% | 34,5% | 34,5% |
| Antioxidant Component[C] | 0,5% | 0,5% | 0,5% | 0,5% |
| Plasticizer Component[D] | 10,5% | 10,5% | 14,5% | - |
| Plasticizer Component[E] | - | - | - | 14,5% |
| Polimeric Component 1[F] | 44,5% | - | - | - |
| Polimeric Component 2[G] | - | 44,5% | 50,0% | - |
| Polimeric Component 3[H] | - | - | - | 50,0% |
| Viscosity at 160 °C[#1] | 3 000 mPa·s | 3 150 mPa·s | 3 100 mPa·s | 2 950 mPa·s |
| Softening Point ° C [#2] | 80 ° C | 93 °C | 87 ° C | 90 ° C |
| Open Time (s)[#3] | 120 - 180 s | 45 s | 120 - 180 s | 120 - 150 s |
| Setting Time (s)[#3] | 5 s | 1 s | 8 s | 4 s |

(continued)

|  | Example 1 | Example 2 | Example 3 | Example 4 |
|---|---|---|---|---|
| Solidification Temperature ˚C#4 | -* | 37,4 °C | 25,1 °C | 28,6 °C |
| Probe Tack#5 | 13 N | 0,5 N | 4 N | 3 N |
| Thermal Stability#6 | 48 h | 98 h | 98 h | 98 h |

Captions:

*It could not be determined because the polymeric base of the composition is comprised of amorphous polyolefin polymers (APO) and has a large amorphous component.
A. Plasticizer component: erucamide.
B. Resin component: C9 hydrogenated synthetic resin obtained through the polymerization of C9.
C. Antioxidant component: primary phenolic antioxidant.
D. Plasticizer component: mineral oil.
E. Plasticizer component selected for the invention: polybutene with a molecular weight of 1 200 Mn determined in accordance with the ASTM D 3536 and a quantity of water 70 mg/kg determined in accordance with the ASTM D 6304.
F. Polymeric component typically used in the formulation of hot melt adhesives for application in the construction of mattresses: APAO.
G. Polymeric component: metallocene-catalyzed propylene-ethylene copolymer with an ethylene percentage of 12% measured according to ASTM D3900 and a viscosity at 190 °C of 7.570 mPa·s measured according to ASTM D1646, and a crystallinity 15 J/g measured using DSC according to ASTM E 794-85.
H. Polymeric component selected for the invention: a mixture of 70% by weight of a metallocene-catalyzed propylene-ethylene copolymer with an ethylene percentage of 12% measured according to ASTM D3900 and a viscosity at 190 °C of 7.570 mPa·s measured according to ASTM D1646, and a crystallinity 15 J/g measured using DSC according to ASTM E 794-85, with 30% of a metallocene-catalyzed propylene-ethylene copolymer with ethylene percentage of 6% % measured according to ASTM D3900 and a viscosity at 190 °C of 1.200 mPa·s measured according to ASTM D1646, and a crystallinity 39 J/g measured using DSC according to ASTM E 794-85.
#1 - Test Method: Brookfield, Termosel System, ASTM D3236
#2 - Test Method: Ring & Ball, ASTM E28.
#3 - Test Method: Colquimica Method (MC 129) at 160 °C: To measure the opening time and setting time of hot melt adhesives, the hot melt adhesive under analysis must first melt and stabilize at 160 °C. Next, the hot melt adhesive is applied to a sample of corrugated cardboard (15 cm x 15 cm), adjusting the nozzle pressure so that the width of the hot melt adhesive wire is equal to 2 mm along its entire length. After adjusting the width of the hot melt adhesive wire, the setting time and opening time are determined, respectively. As this is a trial-and-error process, we start by setting the setting time at 0,5 seconds and the open time at 5,0 seconds. Gluing is carried out automatically: the hot melt adhesive is applied to a corrugated board (15 cm x 15 cm) and, after the set open time, a second corrugated board (15 cm x 5 cm) is glued to it and both substrates are pressed together for the setting time. The setting time must be gradually increased until satisfactory value is reached, i.e. until the fibers of the board break. Finally, the open time is determined. To do this, a previously determined setting time is set and the value of the open time is gradually increased until the bonding process is no longer satisfactory, i.e. there is no fiber breakage. The value of the open time will be the maximum value for which bonding is satisfactory. For both properties, at least three reproducible results must be obtained.
#4 - Test Method: Solidification, Reometer ARES-G2, 40 mm, 0,4 g, 6 °C/min, (100-1)%, 1 Hz.
#5 - Test Method: *Probe Tack*, ASTM D2979-16.
#6 - Test Method: Thermal Stability, ISO 10363.

## Claims

1. Hot-melt adhesive for application in the manufacture of mattresses comprising between 49% and 55% by weight of a polymeric component comprising a metallocene-catalyzed propylene-ethylene mixture of copolymers; between 30% and 40% by weight of a resin component; between 0,1% and 3% by weight of an antioxidant component; between 12% and 17% of a plasticizing component and between 0,1% and 1% of a sliding additive component.

2. Hot-melt adhesive according to the previous claim, wherein the polymeric component comprises a mixture in which at least 60% of the total mass of the polymeric component corresponds to a propylene-ethylene copolymer with a percentage of ethylene between 10% and 15% measured according to the American Society for Testing and Materials (ASTM) D3900, viscosity at 190 °C between 7.500 and 7.600 mPa·s measured according to ASTM D1646, crystallinity between 10 and 20 J/g measured by Differential Scanning Calorimetry (DSC) and up to 40% of the total mass of the polymeric component corresponds to a propylene-ethylene copolymer with a percentage of ethylene between 5% and 10% measured according to ASTM D3900, viscosity at 190 °C between 1.000 and 1.500 mPa-s measured according to ASTM D1646 and a crystallinity between 30 and 50 J/g measured by Differential Scanning Calorimetry (DSC).

3. Hot-melt adhesive according to any of the previous claims, wherein the resin component is selected from: pure monomer resin or hydrocarbon resin.

4. Hot-melt adhesive according to the previous claim, wherein the hydrocarbon resin is selected from: C5 aliphatic, C9 aromatic, C5/C9 aliphatic-aromatic and dicyclopentadiene (DCPD) resins, C9 aromatic and hydrogenated synthetic resin.

5. Hot-melt adhesive according to any of the preceding claims wherein the antioxidant component is selected from: primary, secondary, multifunctional phenolic antioxidants or a mixture thereof.

6. Hot-melt adhesive according to any of the preceding claims, wherein the plasticizer component comprises at least one liquid plasticizer at room temperature, selected from: liquid polymers, saturated hydrocarbons, mineral oils, hydrotreated naphthenic or paraffinic oils, isobutylene-butene copolymer and polybutene.

7. Hot-melt adhesive according to the preceding claims, wherein the polybutene has a molecular weight between 1.000 and 1.500 Mn determined according to ASTM D3536 and a quantity of water between 65 and 75 mg/kg determined according to ASTM D6304.

8. Hot-melt adhesive according to any of the preceding claims, wherein the sliding additive component is selected from: ethylene bis stearamide (EBS), ethylene bisoleamide (EBO), erucamide and erucic acid.

9. Hot-melt adhesive according to any of the preceding claims, wherein the viscosity at 160 °C is comprised between 1.650 and 8.420 mPa·s measured according to ASTM D3236.

10. Hot-melt adhesive according to any of the preceding claims, wherein the softening point is comprised between 80 and 105 °C measured according to ASTM E28.

11. Hot-melt adhesive according to any of the preceding claims, wherein the open time is at least 120 s, and the setting time is between 0,5 s and 5 s measured according to the Colquimica method n° 129 (MC 129) at 160 °C.

12. Process for producing the hot-melt adhesive claimed in any of the previous claims, **characterized by** comprising the following steps:

   a) melt the resin component, the antioxidant component and the plasticizer component at a constant temperature of 130 °C, under constant stirring, until a paste with a homogeneous appearance is formed;
   b) add the sliding additive component to the paste obtained in step a) and mix with constant stirring, maintaining a constant temperature until a paste with a homogeneous appearance is formed;
   c) add the polymeric component to the paste obtained in step b) and mix with constant stirring, maintaining a constant temperature;
   d) maintain constant stirring and temperature until the mixture obtained in step c) presents a homogeneous and translucent appearance.

13. Use of the hot-melt adhesive claimed in claims 1 to 11 in the manufacture of furniture.

14. Use of the hot-melt adhesive claimed in the previous claim in the manufacture of mattresses.

Figure 1

Figure 2

Europäisches
Patentamt

European
Patent Office

Office européen
des brevets

## EUROPEAN SEARCH REPORT

**Application Number**

EP 25 15 6850

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/062534 A1 (COLQUIMICA INDUSTRIA NAC DE COLAS S A [PT]) 20 April 2023 (2023-04-20) * example 1; table 1 * * page 1, paragraph 1 * * claim 1 * | 1-14 | INV. C09J123/14 C08L23/14 |
| X | US 11 267 916 B2 (EASTMAN CHEM CO [US]) 8 March 2022 (2022-03-08) | 1,3-14 | |
| A | * claim 1 * * examples 14,15 * * column 1, line 31 - line 41 * * column 13, line 14 - line 26 * * column 14, line 29 - line 46 * * column 15, line 49 - line 67 * * column 16, line 30 - line 34 * * column 16, line 49 - line 67 * * column 17, line 53 - line 67 * * column 19, line 28 - line 50 * * column 21, line 20 - line 34 * | 2 | |
| A | EP 3 746 518 B1 (BOSTIK INC [US]) 3 January 2024 (2024-01-03) * paragraph [0058]; example 1 * * paragraph [0001] * | 1-14 | TECHNICAL FIELDS SEARCHED (IPC)  C08L C09J |

The present search report has been drawn up for all claims

| Place of search | Date of completion of the search | Examiner |
|---|---|---|
| Munich | 17 July 2025 | van Bergen, Marc |

EPO FORM 1503 03.82 (P04C01)

## ANNEX TO THE EUROPEAN SEARCH REPORT
## ON EUROPEAN PATENT APPLICATION NO.

EP 25 15 6850

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | | Publication date | Patent family member(s) | | Publication date |
|---|---|---|---|---|---|
| WO 2023062534 | A1 | 20-04-2023 | EP | 4416229 A1 | 21-08-2024 |
| | | | PT | 117520 A | 17-04-2023 |
| | | | US | 2024254369 A1 | 01-08-2024 |
| | | | WO | 2023062534 A1 | 20-04-2023 |
| US 11267916 | B2 | 08-03-2022 | NONE | | |
| EP 3746518 | B1 | 03-01-2024 | AU | 2019213638 A1 | 13-08-2020 |
| | | | BR | 112020015327 A2 | 23-02-2021 |
| | | | CA | 3089064 A1 | 08-08-2019 |
| | | | CN | 111655813 A | 11-09-2020 |
| | | | EP | 3746518 A1 | 09-12-2020 |
| | | | ES | 2971558 T3 | 05-06-2024 |
| | | | JP | 2021512979 A | 20-05-2021 |
| | | | JP | 2024026238 A | 28-02-2024 |
| | | | KR | 20200112876 A | 05-10-2020 |
| | | | PL | 3746518 T3 | 22-04-2024 |
| | | | US | 2019233687 A1 | 01-08-2019 |
| | | | WO | 2019152347 A1 | 08-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104449465 A
- CN 103805112 A
- US 11572494 B2
- US 2020277419 A1
- WO 2015135113 A1